# EUROPÄISCHE PATENTSCHRIFT

(11) **EP 2 640 675 B1**
(45) Veröffentlichungstag und Bekanntmachung des Hinweises auf die Patenterteilung: **09.09.2015**
(21) Anmeldenummer: 11788396.7
(22) Anmeldetag: 08.11.2011
(51) Int. Cl.: C04B 26/06, C04B 26/16, C04B 28/04, C04B 28/06, E21D 20/02, F16B 13/14

(54) **ZWEIKOMPONENTEN-MÖRTELMASSE UND IHRE VERWENDUNG**
TWO-COMPONENT MORTAR COMPOSITION AND ITS USE
MÉLANGE DE MORTIER À DEUX COMPOSANTS ET UTILISATION DUDIT MÉLANGE DE MORTIER À DEUX COMPOSANTS

(30) Priorität: 18.11.2010 DE 102010051818
(43) Veröffentlichungstag der Anmeldung: 25.09.2013
(73) Patentinhaber: HILTI Aktiengesellschaft, 9494 Schaan (LI)
(72) Erfinder: BÜRGEL, Thomas, 86899 Landsberg am Lech (DE)
(74) Vertreter: Hilti Aktiengesellschaft Corporate Intellectual Property
(86) Internationale Anmeldenummer: PCT/EP2011/069613
(87) Internationale Veröffentlichungsnummer: WO 2012/065878

(56) Entgegenhaltungen:
- EP-A1- 1 217 017
- EP-A1- 2 032 622
- DE-A1- 10 115 591

## Beschreibung

Gegenstand der vorliegenden Erfindung ist eine Zweikomponenten-Mörtelmasse mit einer härtbaren Harzkomponente mit einem Gehalt an mindestens einem radikalisch polymerisierbaren Harz, Füllstoffen, Beschleunigern, Stabilisatoren und gegebenenfalls weiteren üblichen Mörtelbestandteilen, und einer davon reaktionsinhibierend getrennt angeordneten Härterkomponente mit einem Gehalt an mindestens einem Peroxid, für die chemische Befestigung von Verankerungsmitteln in Bohrlöchern sowie ihre Verwendung zur chemischen Befestigung von Verankerungsmitteln in Bohrlöchern.

Zweikomponenten-Mörtelmassen dieser Art werden beispielsweise als Injektionsmörtel für die chemische Verankerung von (vorzugsweise) Metallelementen in (vorzugsweise) mineralischen Untergründen, wie insbesondere Bauwerken aus Ziegelwerk, Beton oder Naturstein, eingesetzt. Dabei werden zunächst die entsprechend an die zur Befestigung der Verankerungsmittel erforderlichen Bohrlöcher in den mineralischen Untergrund eingebracht, wonach die härtbare Harzkomponente mit der Härterkomponente der Zweikomponenten-Mörtelmasse vermischt und in das Bohrloch eingebracht wird, worauf das zu befestigende Verankerungsmittel eingeführt und justiert wird, wonach die Mörtelmasse aushärtet. Hierfür vertreibt die Anmelderin Injektionsmörtel in Form von schnell härtenden Systemen, die ein Hybridsystem aus einem radikalisch härtenden Methacrylatharz und einem hydraulisch abbindenden Zement aufweist, welches nach der Verarbeitung im Bohrloch einen äußerst belastbaren Kunststoff ergibt.

Um eine ausreichende Verarbeitungszeit zu gewährleisten, wird neben dem (den) für die Härtung notwendigen Beschleuniger(n) und Peroxid(en) grundsätzlich und in merklicher Konzentration mindestens ein Stabilisator verwendet, der eine frühzeitige Aushärtung der Mörtelmasse verhindert.

Die aus dem Stand der Technik bekannten Injektionsmörtel dieser Art mit den üblichen Stabilisatorkonzentrationen im Bereich von 0,2 bis 0,6 Gew.-%, bezogen auf den Harzanteil, erfordern hohe Konzentrationen an Peroxid. Hierbei sind in Abhängigkeit von dem Mischungsverhältnis 7 bis 15 Gew.-% Peroxid, beispielsweise Benzoylperoxid, erforderlich. Trotz dieser hohen Peroxidmenge kommt es durch Mischschwankungen beim Ausbringen der Massen gelegentlich zu einer stellenweisen Nichtaushärtung aufgrund des zu geringen Peroxidanteils.

So offenbart das europäische Patent EP 0 589 831 B1 einen Zweikomponenten-Mörtel zur Befestigung von Verankerungsmitteln in Bohrlöchern, der 1 bis 6,5 Gew.-% Peroxid und 0,01 bis 0,5 Gew.-% Beschleuniger enthält, wobei Inhibitoren oder Stabilisatoren nicht genannt werden. Das europäische Patent EP 0 761 792 beschreibt eine Dübelmasse für die chemische Befestigungstechnik, die 0,5 bis 10 Gew.-% organisches Peroxid, bezogen auf das radikalisch härtbare Reaktionsharz, einen Beschleuniger für das Härtungsmittel und 0,0005 bis 2 Gew.-% eines Piperidinyl-N-oxyls oder Tetrahydropyrrol-N-oxyls als ... gegebenenfalls in Kombination mit einem "herkömmlichen" Inhibitor enthält.

Gegenstand der europäischen Patentanmeldung EP 1 619 174 A2 ist eine ZweikomponentenMörtelmasse mit einer härtbaren Harzkomponente und einer davon reaktionsinhibierend getrennt angeordneten Härterkomponente-für die chemische Befestigung von Verankerungsmitteln in Bohrlöchern, die 0,5 bis 10 Gew.-% Peroxid, bezogen auf das radikalisch polymerisierbare Harz, einen Beschleuniger und einen Polymerisationsinhibitor enthält.

Schließlich offenbart das europäische Patent EP 2 032 622 B1 ein schnellhärtendes chemisches Befestigungssystem für Verankerungselemente mit einer radikalisch härtbaren Reaktionsharzfomiulierung aus einem oder mehreren härtenden olefinischen Reaktionsharzen, einem oder mehreren aminischen Beschleunigern, einem oder mehreren nicht-phenolischen (anaeroben) Inhibitoren und schließlich einem Härter mit mindestens einem Peroxid als Initiator. Dabei sind in dem Härter mindestens 1 % Peroxid, bezogen auf die Masse der Reaktionsharzformulierung, enthalten. Das Material enthält mindestens 1,5 Gew.-% eines aminischen Beschleunigers, 0 bis 20 Gew.-% eines phenolischen Inhibitors und bis zu 5 Gew.-% eines nicht-phenolischen Inhibitors in einem Verhältnis von Beschleuniger zu Inhibitor von > 5.

EP1217017A1 zeigt eine zweikomponentige Kunstharzmasse zur chemischen Befestigung von Ankern, etc. in Bohrlöchern enthaltend ein radikalisch polymerisierbares Harz, Füllstoffe, Beschleuniger und Inhibitoren.

Die in den Mörtelmassen des Standes der Technik verwendeten Inhibitoren dienen dazu, die Verarbeitungszeit auf den gewünschten Zeitraum einzustellen.

Diese herkömmlichen Zweikomponenten-Mörtelmassen für die chemische Befestigung von Verankerungsmitteln in Bohrlöchern sind nun insofern nachteilig, als sie erhebliche Peroxidmengen von 0,5 Gew.-% und größer enthalten müssen, was problematisch ist, weil peroxidhaltige Produkte ab einer Peroxidkonzentration von 1 % (Dibenzoylperoxid) als sensibilisierend gekennzeichnet werden müssen.

Die Aufgabe der vorliegenden Erfindung besteht nun darin, eine Zweikomponenten-Mörtelmasse der eingangs angegebenen Zusammensetzung für die chemische Befestigung von Verankerungsmitteln anzugeben, die eine geringere Peroxidkonzentration aufweist und demzufolge kennzeichnungsfrei ist und dennoch bei einem breiten Mischungsverhältnis im Bereich von 2 : 1 bis 7 : 1, bevorzugt von 3 : 1 bis 5 : 1 und ausreichenden Verarbeitungszeiten eine gute Aushärtung und damit die erforderlichen Lastwerte ermöglicht.

Diese Aufgabe wird nun dadurch gelöst, dass auf den zur Gelzeiteinstellung bisher notwendigen Stabilisator bzw. Inhibitor bis auf eine für die Lagerstabilität notwendige Mindestmenge verzichtet wird und die Verarbeitungszeit über die Beschleunigerkonzentration gesteuert wird.

Gegenstand der Erfindung ist daher die Zweikomponenten-Mörtelmasse nach Anspruch 1. Die Unteransprüche betreffen bevorzugte Ausführungsformen dieses Erfindungsgegenstands sowie die Verwendung dieser Zweikomponenten-Mörtelinässe zur chemischen Befestigung von Verankerungsmitteln in Bohrlöchern.

Die Erfindung betrifft somit eine Zweikomponenten-Mörtelmasse mit einer härtbaren Harzkomponente mit einem Gehalt an mindestens einem radikalisch polymerisierbaren Harz, Füllstoffen, Beschleunigern, Stabilisatoren und gegebenenfalls weiteren üblichen Mörtelbestandteilen, und einer davon reaktionsinhibierend getrennt angeordneten Härterkomponente mit einem Gehalt an mindestens einem Peroxid, für die chemische Befestigung von Verankerungsmitteln in Bohrlöchern, die dadurch gekennzeichnet ist, dass die Harzkomponente 0,1 bis 0,5 Gew.-% mindestens eines Beschleunigers und 0,003 bis 0,03 Gew.-% mindestens eines Stabilisators und die Härterkomponente 0,1 bis 0,35 Gew.-% organisches Peroxid, jeweils bezogen auf das Gesamtgewicht von Harzkomponente und Härterkomponente, enthalten.

Mit der erfindungsgemäßen Zweikomponenten-Mörtelmasse können beispielsweise bei einem Peroxidgehalt von 0,25 Gew.-%, bezogen auf das Gesamtgewicht von Harzkomponente und Härterkomponente, bei einem Mischungsverhältnis von Harzkomponente zu Härterkomponente von 3 : 1 Gew.-Teilen bei einem Stabilisatorgehalt von 0,015 % durch Variation des Beschleunigergehalts von 0,35 Gew.-% ± 20 % Gelzeiten bei 25 °C von 3,5 bis 7 Minuten eingestellt werden.

Dabei hat sich überraschenderweise gezeigt, dass Zweikomponenten-Mörtel der in Rede stehenden Art bei einer Beschleunigerkonzentration von mehr als 0,5 Gew.-% bei der angegebenen Peroxidkonzentration von 0,25 Gew.-% mit Inhibitoren die genannten Gelzeiten nicht eingestellt werden können, da die Formulierungen bei den dafür nötigen, erhöhten Inhibitorkonzentrationen nicht mehr sicher aushärten.

Überraschenderweise gelingt es jedoch mit der erfindungsgemäßen Zweikomponenten-Mörtelmasse der angegebenen Zusammensetzung nicht nur die Kennzeichnung des Peroxidgehalts zu vermeiden, sondern auch eine Mörtelmasse zu erhalten, die bei einem breiten Bereich des Mischungsverhältnisses von Harzkomponente mit Härterkomponente im Bereich von 3 : 1 bis 5 : 1 Gew.-Teilen bei einer ausreichenden Verarbeitungszeit gute Aushärtung und hohe Lastwerte zu erreichen.

Gemäß einer bevorzugten Ausführungsform enthalten die Harzkomponente 8 bis 25 Gew.-% radikalisch polymerisierbares Harz, 8 bis 25 Gew.-% Reaktiwerdünner, 0,1 bis 0,5 Gew.-% Beschleuniger und 0,003 bis 0,03 Gew.-% Stabilisator, 40 bis 70 Gew.-% Füllstoff und 0,5 bis 5 Gew.-% Verdickungsmittel und die Härterkomponente 0,1 bis 0,35 Gew.-% Peroxid, 3 bis 15 Gew.-% Wasser, 5 bis 25 Gew.-% Füllstoff und 0,1 bis 3 Gew.-% Verdickungsmittel, jeweils bezogen auf das Gesamtgewicht von Harzkomponente und Härterkomponente.

Vorzugsweise enthält die Harzkomponente als radikalisch polymerisierbares Harz Harzkomponenten auf Basis von ungesättigten Polyestern, Vinylestern, Urethan(meth)acrylaten und/der Epoxy(meth)acrylaten und Allylethern, gegebenenfalls in Mischung mit Reaktivverdünnern, die ethylenisch ungesättigte Strukturelemente enthalten.

Gemäß einer bevorzugten Ausführungsform enthält die Harzkomponente als Beschleuniger mindestens ein tertiäres N,N-substituiertes Anilin, tertiäres N,N-substituiertes Toluidin und/oder ein alkoxyliertes Derivat davon, wie beispielsweise N,N-Dimethylanilin, N,N-Diethylanilin, N-Ethyl-N-(hydroxyethyl)-anilin, N,N-Dimethyl-p-toluidin, N-Methyl-N-(hydroxyethyl)-p-toluidin, N,N-Diisopropyliden-p-toluidin, Di(hydroxyethyl)-p-toluidin, Di(hydroxyethyl)-m-toluidin und/oder ethoxyliertes Di(hydroxyethyl)-p-toluidin.

Gemäß einer weiteren bevorzugten Ausführungsform enthält die Harzkomponente zusätzlich einen phenolischen und/oder nicht-phenolischen Stabilisator. Vorzugsweise wird der phenolische Stabilisator aus der Gruppe ausgewählt, die Hydrochinon, 2-Methylhydrochinon, Methoxyphenol, 2,4,6-Trimethylphenol, Brenzkatechin, 3-Methoxybrenzkatechin, 4-tert.-Butylbrenzkatechin, 3,5-Di-tert.-butylbrenzkatechin, Butylhydroxytoluol und Derivate davon umfasst.

Als nicht-phenolischen Stabilisator kann die Harzkomponente eine N-Oxylverbindung und/oder einen heterocyclischen Stabilisator enthalten, wobei als N-Oxylverbindungen Piperidinyl-N-oxyl-Derivate und Tetrahydropyrrol-N-oxyl-Derivate bevorzugt sind, während als bevorzugter heterocyclischer Stabilisator Phenothiazin eingesetzt wird. Das bevorzugte Piperidin-N-oxyl-Derivat ist 4-Hydroxy-2,2,6,6-tetramethyl-piperidin-N-oxyl.

Zur weiteren Verbesserung der Haftung der Mörtelmasse an dem Untergrund und dem Verankerungsmittel enthält die Harzkomponente als Reaktivverdünner mindestens eine ethylenisch ungesättigte Verbindung, wie beispielsweise Styrol, alpha-Methylstyrol, Divinylbenzol, (Meth)acrylamid, Methyl(meth)acrylat, Ethyl(meth)acrylat, Propyl(meth)acrylat, Butyl(meth)acrylat, Ethylhexyl(meth)acrylat, Neopentylglykol(meth)acrylat, Ethylenglykoldi(meth)acrylat, Diethylenglykoldi(meth)acrylat, Polyethylenglykol(meth)acrylat, Propylenglykoldi(meth)acrylat, Butandioldi(meth)acrylat, Glycerin(meth)acrylat, Hydroxyethyl-(meth)acrylat, Acetoacetatoethyl(meth)acrylat, alkoxyliertes Bisphenol-A-di(meth)acrylat und/oder Glycidylmethacrylat.

Die hier verwendete Nomenklatur "...(meth)acryl..." bedeutet, dass mit dieser Bezeichnung sowohl die "Methacryl...", "Acryl...", "...methacryl..." als auch die "...acryl..."-Verbindungen umfasst sein sollen.

Die Härterkomponente der erfindungsgemäßen Zweikomponenten-Mörtelmasse enthält vorzugsweise als Peroxid ein organisches Peroxid, wie Dibenzoylperoxid, Methylethylketonperoxid, tert.-Butylperbenzoat, Cyclohexanonperoxid, Laurylperoxid, Cumolhydroperoxid und/oder tert.-Butylperoxy-2-ethylhexanoat.

Schließlich können die Harzkomponente und/oder die Härterkomponente, wie für die in Rede stehenden Mörtelmassen namentlich für Injektionsmörtel üblichen Füllstoffe enthalten, wie Quarz, Sand, pyrogene Kieselsäure, Korund, Kreide, Talkum, Keramik, Tonerde, Glas, Zement, Leichtspat und/oder Schwerspat in geeigneter Teilchengrößenverteilung. Dabei kann bei der Verwendung von Zement als Füllstoff vorzugsweise Portlandzement, Aluminatzement und/oder Gips vorzugsweise in der Harzkomponente verwendet werden, da üblicherweise das in der Härterkomponente enthaltene Peroxid Wasser als Phlegmatisierungsmittel enthält, welches für das Abbinden des Zementanteils in der Harzkomponente genutzt wird.

Weiterhin können die Harzkomponente und/oder die Härterkomponente gegebenenfalls als Verdickungsmittel pyrogene Kieselsäure, Schichtsilikate, Acrylat- oder Polyurethanverdicker, Rizinusölderivate, Neuburger Kieselerde und/oder Xanthangummi enthalten, um dem Material die erforderliche Viskosität zu verleihen.

Weiterhin ist es möglich, zur Einstellung der Viskosität der Härterkompönente dieser 0 bis 5 Gew.-% mindestens eines organischen Lösungsmittels zuzugeben, wie ein Glykol, Glycerin und/oder ein wasserlösliches, mit dem radikalisch polymerisierbaren Harz copolymerisierbares Polyethylenglykol- und/oder Polypropylenglykol-Derivat.

Die erfindungsgemäße Harzkomponente und die erfindungsgemäße Härterkomponente liegen vorzugsweise reaktionsinhibierend getrennt in unterschiedlichen Behältern vor, vorzugsweise in einer Mehrkammer-Vorrichtung, wie einer Mehrkammer-Patrone und/oder-Kartusche oder in Zweikomponenten-Kapseln. Dabei werden die Härterkomponente und die Harzkomponente nach ihrer getrennten Herstellung in diese getrennten Behälter eingebracht, aus denen sie mit Hilfe mechanischer Einrichtungen oder mit Hilfe eines Treibmittels ausgepresst und durch eine Mischeinrichtung, vorzugsweise einen Statikmischer, geführt werden. Die aus dem Statikmischer austretende aushärtende Mörtelmasse wird bei der chemischen Befestigung von Verankerungsmitteln direkt in das Bohrloch in den festen Untergrund eingeführt, wonach das zu befestigende Konstruktionselement, beispielsweise eine Ankerstange, eingeführt wird. Bei einer Gelzeit der erfindungsgemäßen Zweikomponenten-Mörtelmasse im Bereich von 3,5 bis 7 Minuten erhält man ausgezeichnete Festigkeitswerte des in dem Bohrloch befestigten Verankerungsmittels. Es hat sich gezeigt, dass durch die erfindungsgemäß ausgewählten Mengen von Beschleuniger, Stabilisator und Peroxid nicht nur vermieden werden kann, dass die Zweikomponenten-Mörtelmasse als "reizend und sensibilisierend" gekennzeichnet werden muss, sondern dass es ohne weiteres möglich ist, über die Beschleunigerkonzentration die für die Anwendung der Mörtelmasse geeignete Gelzeit einzustellen, wobei gleichzeitig hohe Lastwerte der ausgehärteten Mörtelmasse erreicht werden.

Die folgenden Beispiele und das Vergleichsbeispiel dienen der weiteren Erläuterung der Erfindung.

### Beispiele 1 bis 3 und Vergleichsbeispiel

Man stellt zunächst durch Vermischen der in der nachfolgenden Tablle I angegebenen Bestandteile die Härterkomponenten A des Vergleichsbeispiels und der Beispiele 1 bis 3 her. Entsprechend werden die Härterkomponenten B für das Vergleichsbeispiel und die Beispiele 1 bis 3 hergestellt. Dazu werden die Komponenten zunächst in einem 1 Liter-Kunststoffbecher per Hand vorgemischt und anschließend während 10 Minuten im Dissolver gemischt (4500 min⁻¹; < 100 mbar).

**TABELLE I**

| | **Vergleich** | **Beispiel 1** | **Beispiel 2** | **Beispiel 3** |
|---|---|---|---|---|
| **Harzkomponente A** | | | | |
| Vinylesterharz | | | 15 | 16,7 |
| Urethanmethyacrylat-Harz | 12,7 | 12,7 | | |
| 1,4-Butandioldimethacrylat | 13,43 | 14,07 | | |
| Diethylenglykoldimethacrylat | | | 12,015 | 15,5 |
| Hydroxyethylmethacrylat | 3 | 3 | | |
| Acetoacetatoethylmethacrylat | | | 2 | |
| Di(hydroxyxethyl)-p-toluidin | | | 0,26 | 0,33 |
| Ethoxyliertes Di(hydroxyethyl)-p-toluidin | 0,9 | 0,3 | | |
| 4-Hydroxy-Tempo | 0,005 | 0,005 | 0,005 | |
| Butylhydroxytoluol (BHT) | 0,07 | 0,03 | | |
| tert.-Butylbrenzkatechin | | | 0,02 | 0,023 |
| Pyrogene Kieselsäure | 1,9 | 1,9 | | |
| Polyamidverdicker | | | 1,4 | |
| Quarz 0 - 0,7 mm | 28 | 28 | 24,3 | |
| Glaskugeln 0,2 - 0,6 mm | | | | 26,58 |
| Tonerdezement | | | 20 | 22,2 |
| Portlandzement | 15 | 15 | | |
| Summe | *75* | *75* | *75* | *83,333* |

| **Härterkomponente B** | | | | |
|---|---|---|---|---|
| Dibenzoylperoxid | 0,25 | 0,25 | 0,25 | 0,3 |
| Wasser | 7 | 7 | 5,75 | 3,84 |
| Dipropylenglykol | | | 1,25 | 0,8 |
| Pyrogene Kieselsäure | 1 | 1 | 0,5 | 0,33 |
| Schichtsilikat | | | 0,12 | 0,1 |
| Quarz 0 - 80 µm | 15,75 | 15,75 | 15,88 | 10,5 |
| Tonerde | 1 | 1 | | |
| Schwerspat | | | 1,25 | 0,8 |
| Summe | *25* | *25* | *25* | *16,67* |

Nach der getrennten Herstellung der Harzkomponenten A bzw. der Härterkomponenten B werden diese in-einem Volumenverhältnis von 3 : 1 bzw. 5 : 1, wie es in der nachfolgenden Tabelle II angegeben ist, in einem Statikmischer vermischt und in ein vorbereitetes Bohrloch mit einem Durchmesser von 14 mm in Beton eingebracht. Die Gelzeit der Beispiele liegt bei 25 °C im Bereich von 5 bis 6 Minuten.

Dann bringt man eine Ankerstange M12 mit einer Einbindetiefe von 72 mm in das Bohrloch ein und bestimmt nach einer Aushärtzeit von 1 Tag bei Raumtemperatur (25 °C) die Ausziehkraft der Ankerstange, wobei man ein hydraulisches Werkzeug verwendet, mit welchem die Ausziehkraft der Ankerstange gemessen werden kann. Die hierbei gemessene Ausziehkraft bei 25 °C zusammen mit der Standardabweichung sind in der nachfolgenden Tabelle II angegeben.

**TABELLE II**

| | **Vergleich** | **Beispiel 1** | **Beispiel 2** | **Beispiel 3** |
|---|---|---|---|---|
| **Mischungsverhältnis A: B** | 3:1 | 3:1 | 3:1 | 5:1 |
| | | | | |
| Peroxidgehalt | 0,25 | 0,25 | 0,25 | 0,3 |
| Beschleunigergehalt | 0,9 | 0,3 | 0,26 | 0,33 |
| Stabilisatorgehalt | 0,07 | 0,03 | 0,025 | 0,023 |
| | | | | |
| Gelierzeit bei 25 °C | 6:15 min | 6:00 min | 5:00 min | 5:20 min |
| | | | | |
| Versagenslast [kN]* | | | | |
| bei 25 °C | 14,4 | 35,5 | 53,9 | 68,5 |
| Standardabweichung | 7 | 1,8 | 5,5 | 1,7 |

Aus der obigen Tabelle lässt sich erkennen, dass die erfindungsgemäßen Zweikomponenten-Mörtelmasse deutlich bessere Versagenslasten bei 25 °C ergeben, als mit dem Material des Vergleichsbeispiels erreicht werden, welches im Hinblick auf den Gehalt an Beschleuniger, Stabilisator und Peroxid von der erfindungsgemäßen Lehre abweicht.

## Patentansprüche

1. Zweikomponenten-Mörtelmasse mit einer härtbaren Harzkomponente mit einem Gehalt an mindestens einem radikalisch polymerisierbaren Harz, Füllstoffen, Beschleunigern, Stabilisatoren und gegebenenfalls weiteren üblichen Mörtelbestandteilen, und einer davon reaktionsinhibierend getrennt angeordneten Härterkomponente mit einem Gehalt an mindestens einem Peroxid, für die chemische Befestigung von Verankerungsmitteln in Bohrlöchern, **dadurch gekennzeichnet, dass** die Harzkomponente 0,1 bis 0,5 Gew.-% mindestens eines Beschleunigers und 0,003 bis 0,03 Gew.-% mindestens eines Stabilisators und die Härterkomponente 0,1 bis 0,35 Gew.-% Peroxid, jeweils bezogen auf das Gesamtgewicht von Harzkomponente und Härterkomponente, enthalten.

2. Zweikomponenten-Mörtelmasse nach Anspruch **1, dadurch gekennzeichnet, dass** die Harzkomponente 8 bis 25 Gew.-% radikalisch polymerisierbares Harz, 8 bis 25 Gew.-% Reaktivverdünner, 0,1 bis 0,5 Gew.-% Beschleuniger und 0,003 bis 0,03 Gew.-% Stabilisator, 40 bis 70 Gew.-% Füllstoff und 0,5 bis 5 Gew.-% Verdickungsmittel und die Härterkomponente 0,1 bis 0,35 Gew.-% Peroxid, 3 bis 15 Gew.-% Wasser, 5 bis 25 Gew.-% Füllstoff und 0,1 bis 3 Gew.-% Verdickungsmittel, jeweils bezogen auf das Gesamtgewicht von Harzkomponente und Härterkomponente, enthalten.

3. Zweikomponenten-Mörtelmasse nach mindestens einem der Ansprüche 1 oder 2, **dadurch gekennzeichnet, dass** die Harzkomponente als radikalisch polymerisierbares Harz einen ungesättigten Polyester, einen Vinylester, ein Urethan(meth)acrylat und/oder ein Epoxy(meth)acrylat enthält.

4. Zweikomponenten-Mörtelmasse nach mindestens einem der Ansprüche 1 bis 3, **dadurch gekennzeichnet, dass** die Harzkomponente als Beschleuniger mindestens ein tertiäres, N,N-substituiertes Anilin, tertiäres, N,N-substituiertes Toluidin und/oder ein alkoxyliertes Derivat davon enthält.

5. Zweikomponenten-Mörtelmasse nach Anspruch 4, **dadurch gekennzeichnet, dass** die Harzkomponente als N,N-substituiertes Anilin bzw. Toluidin, N,N-Dimethylanilin, N,N-Diethylanilin, N-Ethyl-N-(hydroxyethyl)-anilin, N,N-Dimethyl-p-toluidin, N-Methyl-N-(hydroxyethyl)-p-toluidin, N,N-Diisopropyliden-p-toluidin, Di(hydroxyethyl)-p-toluidin, Di(hydroxyethyl)-m-toluidin und/oder ethoxyliertes Di(hydroxyethyl)-p-toluidin enthält.

6. Zweikomponenten-Mörtelmasse nach mindestens einem der Ansprüche 1 bis 5, **dadurch gekennzeichnet, dass** die Harzkomponente einen phenolischen und/oder nichtphenolischen Stabilisator enthält.

7. Zweikömponenten-Mörtelmasse nach Anspruch 6, **dadurch gekennzeichnet, dass** die Harzkomponente als phenolischen Stabilisator mindestens einen Vertreter der Hydrochinon, 2-Methylhydrochinon, Methoxyphenol, 2,4,6-Trimethylphenol, Brenzkatechin, 3-Methoxybrenzkatechin, 3,5-Di-tert.-butylbrenzkatechin, Butylhydroxytoluol und Derivate dieser Verbindungen umfassenden Gruppe enthält.

8. Zweikomponenten-Mörtelmasse nach Anspruch 7, **dadurch gekennzeichnet, dass** die Harzkomponente als nicht-phenolischen Stabilisator eine N-Oxylverbindung und/oder einen heterocyclischen Stabilisator enthält.

9. Zweikomponenten-Mörtelmasse nach Anspruch 8, **dadurch gekennzeichnet, dass** die Harzkomponente als N-Oxylverbindung ein Piperidinyl-N-oxyl- und/oder ein Tetrahydropyrrol-N-oxyl-derivat und/oder als heterocyclischen Stabilisator Phenothiazin enthält.

10. Zweikomponenten-Mörtelmasse nach Anspruch 9, **dadurch gekennzeichnet, dass** die Harzkomponente als Piperidinyl-N-oxyl-derivat 4-Hydroxy-2,2,6,6-tetramethylpiperidin-N-oxyl enthält.

11. Zweikomponenten-Mörtelmasse nach mindestens einem der Ansprüche 1 bis 10, **dadurch gekennzeichnet, dass** die Harzkomponente als Reaktivverdünner mindestens eine ethylenisch ungesättigte Verbindung enthält.

12. Zweikomponenten-Mörtelmasse nach Anspruch 11, **dadurch gekennzeichnet, dass** die Harzkomponente als Reaktivverdünner Styrol, alpha-Methylstyrol, Divinylbenzol, (Meth)acrylamid, Methyl(meth)acrylat, Ethyl(meth)acrylat, Propyl(meth)acrylat, Butyl(meth)acrylat, Ethylhexyl(meth)acrylat, Neopentylglykol(meth)acrylat, Ethylenglykoldi(meth)acrylat, Diethylenglykoldi(meth)acrylat, Polyethylenglykol(meth)acrylat, Propylenglykoldi(meth)acrylat, Butandioldi(meth)acrylat, Glycerin(meth)acrylat, Hydroxyethyl-(meth)acrylat, Acetoacetatoethyl(meth)acrylat, alkoxyliertes Bisphenol-A-di(meth)acrylat und/oder Glycidylmethacrylat enthält.

13. Zweikomponenten-Mörtelmasse nach mindestens einem der Ansprüche 1 bis 12, **dadurch gekennzeichnet, dass** die Härterkomponente als Peroxid ein organisches Peroxid enthält.

14. Zweikomponenten-Mörtelmasse nach Anspruch 13, **dadurch gekennzeichnet, dass** die Härterkomponente als organisches Peroxid Dibenzoylperoxid, Methylethylketonperoxid, tert.-Butylperbenzoat, Cyclohexanonperoxid, Laurylperoxid, Cumolhy-droperoxid und/oder tert.-Butylperoxy-2-ethylhexanoat enthält.

15. Zweikomponenten-Mörtelmasse nach mindestens einem der Ansprüche 1 bis 14, **dadurch gekennzeichnet, dass** die Harzkomponente und/oder die Härter-komponente als Füllstoff Quarz, Sand, pyrogene Kieselsäure, Korund, Kreide, Talkum, Keramik, Tonerde, Glas, Zement, Leichtspat und/oder Schwerspat in geeigneter Teilchengrößenverteilung enthalten.

16. Zweikomponenten-Mörtelmasse nach mindestens einem der Ansprüche 1 bis 15, **dadurch gekennzeichnet, dass** die Harzkomponente und/oder die Härter-komponente als Verdickungsmittel pyrogene Kieselsäure, Schichtsilikate, Acrylat- oder Polyurthan-Verdicker, Rizinusölderivate, Neuburger Kieselerde und/oder Xanthan-Gum enthalten.

17. Zweikomponenten-Mörtelmasse nach mindestens einem der Ansprüche 1 bis 16, **dadurch gekennzeichnet, dass** die Härterkomponente 0 bis 5 Gew.-% mindestens eines organischen Lösemittels enthält.

18. Zweikomponenten-Mörtelmasse nach Anspruch 17, **dadurch gekennzeichnet, dass** die Härterkomponente als organisches Lösemittel ein Glykol, Glycerin und/oder ein wasserlösliches, mit dem radikalisch polymerisierbaren Harz copolymerisierbares Polyethylenglykol- und/oder Polypropylenglykol-Derivat enthält.

19. Zweikomponenten-Mörtelmasse nach mindestens einem der Ansprüche 1 bis 18, **dadurch gekennzeichnet, dass** die Harzkomponente und die Härterkomponente reaktionsinhibierend getrennt in unterschiedlichen Behältern, vorzugsweise einer Mehrkammer-Vorrichtung, wie einer Mehrkammer-Patrone und/oder -Kartusche, oder in Zweikomponenten-Kapseln vorliegen.

20. Verwendung der Zweikomponenten-Mörtelmasse nach mindestens einem der vorhergehenden Ansprüche zur chemischen Befestigung von Verankerungsmitteln in Bohrlöchern.

## Claims

1. Two-component mortar composition with a resin component that may be hardened, containing at least one resin that may be radically polymerised, fillers, accelerators, stabilisers and, if necessary, other normal mortar components and a hardening component arranged separately from these in a way that inhibits reaction, containing at least one peroxide, for chemically attaching anchoring devices in boreholes, **characterised in that** the resin components contain 0.1 to 0.5% by weight at least of an accelerator and 0.003 to 0.03% by weight at least of a stabiliser and the hardening components contain 0.1 to 0.35% by weight of peroxide, each with reference to the total weight of the resin components and hardening components.

2. Two-component mortar composition according to claim 1, **characterised in that** the resin components contain 8 to 25% by weight of resin that may be radically polymerised, 8 to 25% by weight of reactive thinner, 0.1 to 0.5% by weight of accelerator and 0.003 to 0.03% of stabiliser, 40 to 70% by weight of filler and 0.5 to 5% by weight of thickener and the hardening components contain 0.1 to 0.35% by weight of peroxide, 3 to 15% by weight of water, 5 to 25% by weight of filler and 0.1 to 3% by weight of thickener, each in relation to the total weight of the resin components and hardening components.

3. Two-component mortar composition according to at least one of claims 1 or 2, **characterised in that** the resin component contains an unsaturated polyester, a vinyl ester, a urethane (meth)acrylate and/or an epoxy (meth)acrylate as a resin that may be radically polymerised.

4. Two-component mortar composition according to at least one of claims 1 to 3, **characterised in that** the resin component contains at least a tertiary, n,n-substituted aniline, tertiary, n,n-substituted toluidine and/or an alkoxylated derivative of these as an accelerator.

5. Two-component mortar composition according to claim 4, **characterised in that** the resin component contains n,n-dimethyl aniline, n,n-diethyl aniline, n-ethyl-n-(hydroxyethyl) aniline, n,n-dimethyl-p-toluidine, n-methyl-n-(hydroxyethyl)-p-toluidine, n,n-diisopropyliden-p-toluidine, di(hydroxyethyl)-p-toluidine, di(hydroxyethyl)-m-toluidine and/or ethoxylated di(hydroxyethyl)-p-toluidine as an n,n-substituted aniline or toluidine.

6. Two-component mortar composition according to at least one of claims 1 to 5, **characterised in that** the resin component contains a phenolic and/or non-phenolic stabiliser.

7. Two-component mortar composition according to claim 6, **characterised in that** the resin component contains at least one representative of hydroquinone, 2-methylhydroquinone, methoxyphenol, 2,4,6-trimethylphenol, catechol, 3-methoxycatechol, 3,5-di-tert.-butylcatechol, butylhydroxytoluene and derivatives of the group comprising these compounds as a phenolic stabiliser.

8. Two-component mortar composition according to claim 7, **characterised in that** the resin component contains an n-oxyl compound and/or a heterocyclical stabiliser as a non-phenolic stabiliser.

9. Two-component mortar composition according to claim 8, **characterised in that** the resin component contains a piperidinyl-n-oxyl and/or a tetrahydropyrrole-n-oxyl derivative as an n-oxyl compound and/or phenothiazine as a heterocyclical stabiliser.

10. Two-component mortar composition according to claim 9, **characterised in that** the resin component contains 4-hydroxy-2,2,6,6-tetramethyl-piperidin-n-oxyl as a piperidinyl-n-oxyl derivative.

11. Two-component mortar composition according to at least one of claims 1 to 10, **characterised in that** the resin component contains at least an ethylenically unsaturated compound as a reactive thinner.

12. Two-component mortar composition according to claim 11, **characterised in that** the resin component contains styrene, alphamethylstyrene, divinylbenzene, (meth)acrylamide, methyl (meth)acrylate, ethyl (meth)acrylate, propyl (meth)acrylate, butyl (meth)acrylate, ethylhexyl (meth)acrylate, neopentyl glycol (meth)acrylate, ethylene glycol di(meth)acrylate, diethylene glycol di(meth)acrylate, polyethylene glycol (meth)acrylate, propylene glycol di(meth)acrylate, butanediol di(meth)acrylate, glycerine (meth)acrylate, hydroxyethyl (meth)acrylate, acetoacetatoethyl (meth)acrylate, alkoxylated bisphenol-a-di(meth)acrylate and/or glycidyl methacrylate as a reactive thinner.

13. Two-component mortar composition according to at least one of claims 1 to 12, **characterised in that** the hardening component contains an organic peroxide as a peroxide.

14. Two-component mortar composition according to claim 13, **characterised in that** the hardening component contains dibenzoyl peroxide, methyl ethyl ketone peroxide, tert.-butyl perbenzoate, cyclohexanone peroxide, lauryl peroxide, cumolhydroperoxide and/or tert.-butylperoxy-2-ethylhexanoate as an organic peroxide.

15. Two-component mortar composition according to at least one of claims 1 to 14, **characterised in that** the resin components and/or hardening components contain quarz, sand, pyrogenic silica, corundum, chalk, talcum, ceramic, clay, glass, cement, light spar and/or heavy spar in a suitable distribution of particle sizes as a filler.

16. Two-component mortar composition according to at least one of claims 1 to 15, **characterised in that** the resin components and/or hardening components contain pyrogenic silica, sheet silicates, acrylate or polyurethane thickener, castor oil derivatives, Neuburg silica and/or xanthan gum as a thickener.

17. Two-component mortar composition according to at least one of claims 1 to 16, **characterised in that** the hardening component contains 0 to 5% by weight at least of an organic solvent.

18. Two-component mortar composition according to claim 17, **characterised in that** the hardening component contains a glycol, glycerine and/or a water-soluble, polyethylene glycol and/or polypropylene glycol derivative that may be copolymerised with the resin that may be radically polymerised as an organic solvent.

19. Two-component mortar composition according to at least one of claims 1 to 18, **characterised in that** the resin components and hardening components are separated in a way that inhibits reaction in separate containers, preferably a multi-chamber device, such as a multi-chamber cartridge or in two-component capsules.

20. Use of the two-component mortar composition according to at least one of the previous claims for chemically attaching anchoring devices in boreholes.

## Revendications

1. Composition de mortier bicomposant, comportant un composant résine durcissable contenant au moins une résine polymérisable par polymérisation radicalaire, des charges, des accélérateurs, des stabilisants et éventuellement d'autres constituants usuels du mortier, et un composant durcisseur, disposé séparément du premier avec un effet inhibiteur de réaction, comprenant au moins un peroxyde, pour la fixation chimique de moyens d'ancrage dans des trous de forage, **caractérisée en ce que** le composant résine contient 0,1 à 0,5 % en poids d'au moins un accélérateur et 0,003 à 0,03 % en poids d'au moins un stabilisant, et le composant durcisseur contient 0,1 à 0,35 % en poids d'un peroxyde, dans chaque cas par rapport au poids total du composant résine et du composant durcisseur.

2. Composition de mortier bicomposant selon la revendication 1, **caractérisée en ce que** le composant résine contient 8 à 25 % en poids d'une résine polymérisable par polymérisation radicalaire, 8 à 25 % en poids d'un diluant réactif, 0,1 à 0,5 % en poids d'un accélérateur et 0,003 à 0,03 % en poids d'un stabilisant, 40 à 70 % en poids d'une charge et 0,5 à 5 % en poids d'un épaississant, et le composant durcisseur contient 0,1 à 0,35 % en poids d'un peroxyde, 3 à 15 % en poids d'eau, 5 à 25 % en poids d'une charge et 0,1 à 3 % en poids d'un épaississant, dans chaque cas par rapport au poids total du composant résine et du composant durcisseur.

3. Composition de mortier bicomposant selon au moins l'une des revendications 1 ou 2, **caractérisée en ce que** le composant résine contient en tant que résine polymérisable par polymérisation radicalaire un polyester insaturé, un ester vinylique, un (méth)acrylate d'uréthanne et/ou un époxy(méth)acrylate.

4. Composition de mortier bicomposant selon au moins l'une des revendications 1 à 3, **caractérisée en ce que** le composant résine contient en tant qu'accélérateur au moins une aniline tertiaire N,N-substituée, une toluidine tertiaire N,N-substituée et/ou un dérivé alcoxylé de celles-ci.

5. Composition de mortier bicomposant selon la revendication 4, **caractérisée en ce que** le composant résine contient en tant qu'aniline ou toluidine N,N-substituée de la N,N-diméthylaniline, de la N,N-diéthylaniline, de la N-éthyl-N-(hydroxyéthyl)-aniline, de la N,N-diméthyl-p-toluidine, de la N-méthyl-N-(hydroxyéthyl)-p-toluidine, de la N,N-diisopropylidène-p-toluidine, de la di(hydroxyéthyl)-p-toluidine, de la di(hydroxyéthyl)-m-toluidine et/ou une di(hydroxyéthyl)-p-toluidine éthoxylée.

6. Composition de mortier bicomposant selon au moins l'une des revendications 1 à 5, **caractérisée en ce que** le composant résine contient un stabilisant phénolique et/ou non-phénolique.

7. Composition de mortier bicomposant selon la revendication 6, **caractérisée en ce que** le composant résine contient en tant que stabilisant phénolique au moins un représentant du groupe comprenant l'hydroquinone, la 2-méthylhydroquinone, le méthoxyphénol, le 2,4,6-triméthylphénol, le pyrocatéchol, le 3-méthoxypyrocatéchol, le 3,5-di-tert-buylpyrocatéchol, le butylhydroxytoluène et les dérivés de ces composés.

8. Composition de mortier bicomposant selon la revendication 7, **caractérisée en ce que** le composant résine contient en tant que stabilisant non-phénolique un composé N-oxyle et/ou un stabilisant hétérocyclique.

9. Composition de mortier bicomposant selon la revendication 8, **caractérisée en ce que** le composant résine contient en tant que composé N-oxyle un dérivé de pipéridinyl-N-oxyle et/ou un dérivé de tétrahydropyrrol-N-oxyle, et/ou en tant que stabilisant hétérocyclique de la phénothiazine.

10. Composition de mortier bicomposant selon la revendication 9, **caractérisée en ce que** le composant résine contient en tant que dérivé de pipéridinyl-N-oxyle du 4-hydroxy-2,2,6,6-tétraméthylpipéridin-N-oxyle.

11. Composition de mortier bicomposant selon au moins l'une des revendications 1 à 10, **caractérisée en ce que** le composant résine contient en tant que diluant réactif au moins un composé à insaturation éthylénique.

12. Composition de mortier bicomposant selon la revendication 11, **caractérisée en ce que** le composant résine contient en tant que diluant réactif du styrène, de l'alpha-méthylstyrène, du divinylbenzène, du (méth)acrylamide, du (méth)acrylate de méthyle, du (méth)acrylate d'éthyle, du (méth)acrylate de propyle, du (méth)acrylate de butyle, du (méth)acrylate d'éthylhexyle, du (méth)acrylate de néopentylglycol, du di(méth)acrylate d'éthylèneglycol, du di(méth)acrylate de diéthylèneglycol, du (méth)acrylate de polyéthylèneglycol, du di(méth)acrylate de propylèneglycol, du di(méth)acrylate de butanediol, du (méth)acrylate de glycérol, du (méth)acrylate d'hydroxyéthyle, du (méth)acrylate d'acétoacétatoéthyle, du di(méth)acrylate de bisphénol A alcoxylé et/ou du méthacrylate de glycidyle.

13. Composition de mortier bicomposant selon au moins l'une des revendications 1 à 12, **caractérisée en ce que** le composant durcisseur contient en tant que peroxyde un peroxyde organique.

14. Composition de mortier bicomposant selon la revendication 13, **caractérisée en ce que** le composant durcisseur contient en tant que peroxyde organique du peroxyde de dibenzoyle, du peroxyde de méthyléthylcétone, du perbenzoate de tert-butyle, du peroxyde de cylohexanone, du peroxyde de lauryle, de l'hydroperoxyde de cumène et/ou du peroxy-2-éthylhexanoate de tert-butyle.

15. Composition de mortier bicomposant selon au moins l'une des revendications 1 à 14, **caractérisée en ce que** le composant résine et/ou le composant durcisseur contiennent en tant que charge du quartz, du sable, de la silice pyrogène, du corindon, de la craie, du talc, de la céramique, de l'alumine, du verre, du ciment, du sulfate de calcium et/ou du spath pesant, selon une distribution granulométrique appropriée.

16. Composition de mortier bicomposant selon au moins l'une des revendications 1 à 15, **caractérisée en ce que** le composant résine et/ou le composant durcisseur contiennent en tant qu'épaississant de la silice pyrogène, des phyllosilicates, des épaississants à base d'acrylate ou de polyuréthanne, des dérivés de l'huile de ricin, de la silice de Neubourg et/ou de la gomme xanthane.

17. Composition de mortier bicomposant selon au moins l'une des revendications 1 à 16, **caractérisée en ce que** le composant durcisseur contient 0 à 5 % en poids d'au moins un solvant organique.

18. Composition de mortier bicomposant selon la revendication 17, **caractérisée en ce que** le composant durcisseur contient en tant que solvant organique un glycol, du glycérol et/ou un dérivé de polyéthylèneglycol et/ou de polypropylèneglycol soluble dans l'eau, copolymérisable avec une résine polymérisable par polymérisation radicalaire.

19. Composition de mortier bicomposant selon au moins l'une des revendications 1 à 18, **caractérisée en ce que** le composant résine et/ou le composant durcisseur se présentent séparément, avec effet inhibiteur de réaction, dans des récipients différents, de préférence dans un dispositif à plusieurs compartiments, tels qu'une cassette et/ou une cartouche à plusieurs compartiments, ou dans des capsules bicomposants.

20. Utilisation de la composition de mortier bicomposant selon au moins l'une des revendications précédentes pour la fixation chimique d'agents d'ancrage dans des trous de forage.
